# FASCICULE DE BREVET EUROPEEN

(11) **EP 1 403 622 B1**
(45) Date de publication et mention de la délivrance du brevet: **18.06.2008**
(21) Numéro de dépôt: 03292190.0
(22) Date de dépôt: 05.09.2003
(51) Int. Cl.: G01D 5/245

(54) **Capteur d'angle absolu**
Absoluter Drehgeber
Absolute angle sensor

(30) Priorité: 27.09.2002 FR 0212013
(43) Date de publication de la demande: 31.03.2004
(73) Titulaire: SNR ROULEMENTS, F-74010 Annecy Cedex (FR)
(72) Inventeur: Desbiolles, Pascal, 74570 Thorens-Glières (FR); Duret, Christophe, 74000 Annecy (FR)
(74) Mandataire: Geismar, Thierry

(56) Documents cités:
- EP-A- 0 321 439
- EP-A- 1 167 927
- DE-A- 3 928 027

## Description

L'invention concerne un dispositif de détermination de la position angulaire absolue d'un organe tournant par rapport à une structure fixe, un système de direction pour véhicule automobile ainsi qu'un roulement comprenant un tel dispositif.

Dans de nombreuses applications, notamment automobile telles que les systèmes de contrôle de trajectoire ou les systèmes de direction assistée électrique, il est nécessaire de connaître la position angulaire absolue d'un organe tournant par rapport à une structure fixe.

On entend par position angulaire absolue l'angle séparant la position de l'organe tournant à un instant donné, d'une position de référence de l'organe tournant, cette position de référence étant fixe et donnée par rapport à la structure fixe.

Par opposition, la position angulaire relative est l'angle séparant la position de l'organe d'une position initiale quelconque et variable par rapport à la structure fixe.

On connaît du document EP-1 167 927 un tel dispositif qui utilise notamment un codeur destiné à être mis en rotation conjointement à l'organe tournant, ledit codeur comprenant une piste multipolaire principale et une piste multipolaire dite « top tour » qui sont concentriques, ladite piste top tour comprenant une singularité de sorte que le capteur associé délivre une impulsion par tour de codeur. Après sa mise en service, un tel dispositif détermine la position angulaire absolue dès la détection de la première impulsion top tour.

Une limitation de ce dispositif est que la détection de l'impulsion n'intervient qu'une seule fois par tour de codeur. Dans certain cas, il en résulte qu'un déplacement angulaire important de l'organe tournant doit être effectué avant de connaître sa position angulaire absolue. Et, avec le dispositif connu, il n'est pas possible d'augmenter le nombre de singularités par tour de codeur faute de pouvoir les discriminer entre elles.

Dans le document DE 39 28 027 est décrit un dispositif selon le préambule de la revendication 1.

L'invention propose notamment un dispositif perfectionné qui, après sa mise en service, permet de déterminer la position angulaire absolue du codeur après un déplacement angulaire qui est réduit et ajustable en fonction de l'application envisagée.

A cet effet, et selon un premier aspect, l'invention propose un dispositif de détermination de la position angulaire absolue d'un organe tournant par rapport à une structure fixe, ledit dispositif comprenant :
- un codeur destiné à être mis en rotation conjointement à l'organe tournant, ledit codeur comprenant une piste multipolaire principale et une piste multipolaire dite « top tour » qui sont concentriques, ladite piste top tour comprenant M singularités réparties angulairement ;
- un capteur fixe disposé en regard et à distance d'entrefer du codeur, comprenant au moins trois éléments sensibles dont au moins deux sont positionnés en regard de la piste principale de sorte à délivrer deux signaux électriques S1, S2 périodiques en quadrature et au moins un est positionné en regard de la piste top tcur de sorte à délivrer un signal électrique S3, le capteur comprenant un circuit électronique apte, à partir des signaux S1, S2 et S3, à délivrer deux signaux digitaux de position A, B carrés en quadrature qui sont représentatifs de la position angulaire de l'organe tournant et un signal top tour C sous forme de M impulsions par tour du codeur ;
- un dispositif de traitement des signaux A, B, C qui comprend des moyens de comptage aptes à déterminer, à partir d'une position initiale, les variations de la position angulaire du codeur ;
dans lequel les M singularités sont réparties angulairement de sorte que le signal C soit agencé pour, en combinaison avec les signaux A et B, définir des séquences binaires qui sont représentatives chacune d'une position angulaire absolue du codeur, le dispositif de traitement comprenant des moyens de recalage de la position initiale qui, lors de la détection d'une séquence binaire, sont aptes à affecter, en tant que position initiale, la valeur de la position angulaire absolue associée à ladite séquence binaire

Selon un deuxième aspect, l'invention propose un roulement équipé d'un tel dispositif de détermination, du type comprenant une bague fixe destinée à être associée à un organe fixe, une bague tournante destinée à être mise en rotation par l'organe tournant et des corps roulants disposés entre lesdites bagues, dans lequel le codeur est associé à la bague tournante.

Selon un troisième aspect, l'invention propose un système de direction pour véhicule automobile, comprenant un tel dispositif de détermination, le codeur étant solidaire en rotation du volant de direction du véhicule et le capteur étant solidaire du châssis du véhicule, de sorte à mesure la position angulaire absolue du volant par rapport au châssis.

D'autres objets et avantages de l'invention apparaîtront au cours de la description qui suit, faite en référence aux dessins annexés, dans lesquels :
- la figure 1 est une vue de face d'un codeur utilisable dans un dispositif de détermination selon l'invention, ledit codeur comprenant une piste multipolaire principale et une piste multipolaire top tour ;
- la figure 2 est une vue schématique et partielle d'un système de direction pour véhicule automobile, qui est équipé d'un dispositif de détermination de la position angulaire absolue du volant ;
- la figure 3 est une vue en coupe longitudinale d'un roulement équipé d'un dispositif de détermination de la position angulaire absolue de la bague tournante par rapport à la bague fixe, le capteur et le dispositif de traitement des signaux n'étant pas représentés.

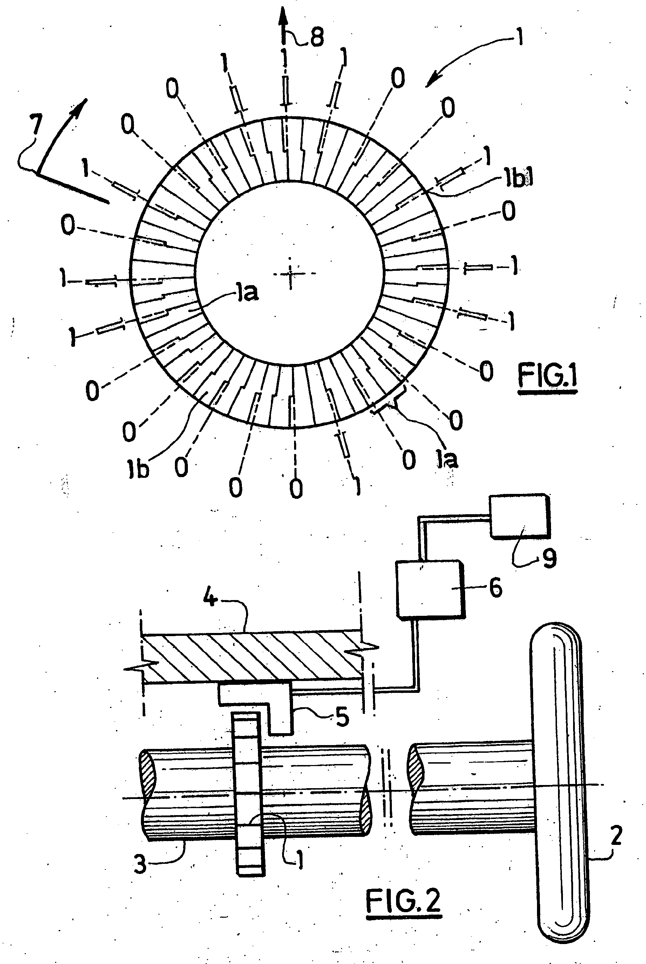

L'invention concerne un dispositif de détermination de la position angulaire absolue d'un organe tournant par rapport à une structure fixe, qui comprend un codeur 1 tel que celui représenté sur la figure 1.

Dans une application particulière envisagée, le dispositif est intégré dans un système de direction de sorte à mesurer la position angulaire absolue du volant de direction 2 par rapport au châssis, cette mesure pouvant être utilisée dans des systèmes de contrôle de trajectoire du véhicule ou des systèmes d'assistance de la direction.

En relation avec la figure 2, on décrit un système de direction comprenant une colonne de direction 3 sur lequel est monté un codeur 1 tel que celui représenté sur la figure 1, de sorte à assurer la solidarisation en rotation de la colonne 3 et du codeur 1. De façon connue, la colonne 3 est associée au volant de direction 2 par l'intermédiaire duquel le conducteur applique un couple de braquage. Par ailleurs, la colonne 3 est agencée pour transmettre le couple de braquage aux roues de direction du véhicule. A cet effet, les roues peuvent être associées mécaniquement à la colonne 3 par l'intermédiaire d'un pignon de crémaillère et d'une crémaillère afin de transformer le mouvement de rotation de la colonne 3 en déplacement angulaire des roues, ou être découplées de la colonne 3. Dans ce dernier cas, le codeur 1 peut être associé directement à une partie du volant 2.

Le volant 2 est agencé pour pouvoir effectuer une pluralité de tours, typiquement deux, autour de la position dans laquelle les roues sont droites.

Le système de direction comprend en outre un élément fixe 4 qui est solidaire du châssis du véhicule automobile, un capteur 5 étant associé sur ledit élément de sorte que les éléments sensibles dudit capteur soient disposés en regard et à distance d'entrefer du codeur 1.

Pour pouvoir déterminer la position angulaire absolue du codeur 1, et donc du volant 2, par rapport à l'élément fixe 4, et donc au châssis, le codeur 1 comprend une piste multipolaire principale 1a et une piste multipolaire dite « top tour » 1b qui sont concentriques. La piste top tour 1b comprend M (avec M > 1) singularités 1b1 réparties angulairement.

Dans un exemple particulier, le codeur 1 est formé d'un anneau magnétique multipolaire sur lequel est aimantée une pluralité de paires 1c de pôles Nord et Sud équiréparties avec une largeur angulaire constante de sorte à former les pistes principale 1a et top tour 1b, une singularité magnétique 1b1 de la piste top tour 1b étant formée de deux pôles adjacents dont la transition magnétique est différente des autres.

Suivant la réalisation représentée sur la figure 1, les pistes principale 1a, disposée vers l'intérieur de l'anneau, et top tour 1b, disposée vers l'extérieur de l'anneau, comprennent 24 paires de pôles 1c, les paires de pôles 1c de la piste top tour 1b étant en retard de phase d'une valeur φ par rapport à celles de la piste principale 1a.

Chaque singularité 1b1 est formée d'une paire de pôles 1c, la largeur des pôles étant agencée pour qu'un pôle soit déphasé de -φ par rapport au pôle correspondant de la piste principale 1a. Ainsi, chaque impulsion du signal C correspond à la détection d'une inversion de déphasage entre la piste principale 1a et la piste top tour 1b.

Par ailleurs, le capteur 5 comprend au moins trois éléments sensibles dont au moins deux sont positionnés en regard de la piste principale 1a et au moins un est positionné en regard de la piste top tour 1b.

Dans un exemple particulier, les éléments sensibles sont choisis dans le groupe comprenant les sondes à effet Hall, les magnétorésistances, les magnétorésistances géantes.

Le capteur 5 utilisé est apte à délivrer deux signaux électriques S1, S2 périodiques en quadrature par l'intermédiaire des éléments sensibles disposés en regard de la piste principale 1a et un signal électrique S3 par l'intermédiaire des éléments sensibles disposés en regard de la piste top tour 1b.

Le principe d'obtention des signaux S1 et S2 à partir d'une pluralité d'éléments sensibles alignés est par exemple décrit dans le document FR-2 792 403 issu de la demanderesse.

Mais des capteurs 5 comprenant deux éléments sensibles qui sont aptes à délivrer les signaux S1 et S2 sont également connus.

Le capteur 5 comprend en outre un circuit électronique qui, à partir des signaux S1, S2 et S3, délivre des signaux digitaux de position A, B carrés en quadrature et un signal top tour C sous forme de M impulsions électriques par tour du codeur 1.

Un principe d'obtention des signaux digitaux A, B et C, ainsi que différents modes de réalisation des singularités magnétiques 1b1, sont décrits dans les documents FR-2 769 088 et EP-0 871 014.

Suivant une réalisation, le capteur 5 comprend en outre un interpolateur, par exemple du type décrit dans le document FR-2 754 063 issu de la demanderesse, permettant d'augmenter la résolution des signaux de sortie.

Le capteur 5 peut être intégré sur un substrat en silicium ou équivalent par exemple AsGa, de sorte à former un circuit intégré et personnalisé pour une application spécifique, circuit parfois désigné sous le terme ASIC pour faire référence au circuit intégré conçu partiellement ou complètement en fonction des besoins.

Bien que la description soit faite en relation avec un ensemble codeur/capteur magnétique, il est également possible de mettre en oeuvre l'invention de façon analogue en utilisant une technologie de type optique. Par exemple, le codeur 1 peut être formé d'une cible en métal ou en verre sur laquelle les pistes principale 1a et top tour 1b ont été gravées de sorte à former un motif optique analogue au motif magnétique multipolaire exposé ci-dessus, les éléments sensibles étant alors formés de détecteurs optiques.

Le dispositif de détermination comprend en outre un dispositif de traitement 6 des signaux A, B, C qui comprend des moyens de comptage aptes à déterminer, à partir d'une position initiale, les variations de la position angulaire du codeur 1. Dans un exemple de réalisation, les moyens de comptage comprennent un registre dans lequel la valeur de la position angulaire est incrémentée ou décrémentée d'une valeur angulaire correspondant au nombre de fronts des signaux A et B qui sont détectés, la valeur initiale étant par exemple fixée à zéro lors de la mise en service du dispositif. Ainsi, le dispositif de traitement permet de connaître la position relative du codeur 1 par rapport à la position initiale.

Pour obtenir la position angulaire absolue de l'organe tournant, il est prévu d'utiliser un codeur 1 dont la répartition des singularités 1b1 de la piste top tour 1b est spécifique.

Dans le mode de réalisation représenté sur la figure 1, la répartition angulaire des dix singularités 1b1 de la piste top tour 1b peut être représentée par le motif binaire 000001000110100111001011 obtenu par exploitation du signal C et des signaux A et B lors d'une rotation d'un tour, où le chiffre 1 correspond à la détection d'une singularité 1b1 sur le signal C et le chiffre 0 à l'absence de détection d'une telle singularité, les chiffres 0 et 1 étant affectés respectivement sur les paires de pôles qui sont discriminées au moyen des signaux A, B.

Avec ce motif binaire, il est possible d'établir, en fonction de la position initiale du codeur 1 et du sens de rotation, le nombre d'états 0 ou 1 à lire pour déterminer de façon univoque la position absolue du codeur 1 sur un tour. Dans la suite de la description, cette succession de 0 ou 1 qui permet de déterminer une position absolue du codeur 1 sur un tour, est appelée séquence binaire.

Suivant l'invention, les M singularités 1b1 sont réparties angulairement sur le codeur 1 de sorte que le signal C soit agencé pour, en combinaison avec les signaux A et B, définir des séquences binaires qui sont représentatives chacune d'une position angulaire absolue du codeur. A cet effet, préalablement à l'utilisation du dispositif de détermination, la position angulaire absolue d'une ou plusieurs singularités peut être indexée par rapport à une position de référence. En particulier, dans une application de type système de direction, la position de référence peut être la position ligne droite des roues. Cette indexation peut être réalisée en sortie de chaîne et sur un banc dédié, la valeur des positions absolues pouvant être mémorisée dans une mémoire de type EEPROM ou flash du dispositif de traitement. Cette indexation peut également être réalisée de manière mécanique.

Ainsi, le traitement des signaux A, B et des signaux C permet de construire une chaîne de 0 et de 1 que l'on cherchera à localiser dans le motif binaire. Et, lorsque cette chaîne est suffisamment longue pour être unique et former une séquence binaire, l'angle absolu associé au dernier état détecté est connu.

Et, dès la détection d'une séquence binaire, la position angulaire absolue du codeur 1 est affectée, en tant que valeur initiale, dans le dispositif de traitement 6 par l'intermédiaire de moyens de recalage de sorte à connaître ensuite, en continu, la position angulaire absolue grâce aux moyens de comptage.

Selon un mode de réalisation, le dispositif de traitement 6 est un microprocesseur agencé pour recevoir les signaux A, B, C issus du capteur 5, dans lequel les séquences binaires et les positions angulaires absolues associées sont mémorisées.

Par exemple, en partant de la position indiquée par la flèche 7 sur la figure 1, dès que la chaîne 10011 est détectée, celle-ci est identifiée comme étant une séquence binaire en ce qu'elle est unique dans le motif binaire, et la position angulaire représentée par la flèche 8 sur la figure 1 est la position angulaire absolue associée à cette séquence binaire.

Dans le mode de réalisation de codeur 1 de la figure 1, on peut montrer que quelque soit l'angle de départ à la mise en service du dispositif de détection, l'angle absolu est connu dans le pire des cas après une rotation de 75° dans un sens ou dans l'autre.

En outre, avec le codeur 1 de la figure 1, la position angulaire absolue est déterminée si on effectue :
- une rotation à gauche de plus de 15° suivie d'une rotation à droite de plus de 15°, dans le cas où la position initiale est proche de la position « ligne droite » (flèche 8) ; ou
- une rotation à gauche de plus de 30° suivie d'une rotation à droite de plus de 30°, dans le cas où la position initiale est comprise dans le secteur angulaire [-90°, 90°] autour de la position « ligne droite ».

Selon l'invention, il est donc possible, après la mise en service du dispositif, de connaître la position absolue du codeur 1, et donc celle de l'organe tournant associé, dès que celui-ci a tourné d'un angle inférieur à un tour, et ce notamment du fait de la présence ou de l'absence des M singularités 1b1 qui sont non-équiréparties de façon spécifique sur la piste top tour 1b.

En fonction des besoins spécifiques de chaque application, il est possible de répartir les singularités 1b1 différemment sur la piste top tour 1b de sorte soit à augmenter soit à diminuer la longueur maximale des séquences binaires dans le motif binaire, c'est-à-dire l'angle de rotation maximal permettant dans tous les cas de déterminer l'angle absolu. En outre, il est également possible de faire varier le nombre de paires de potes 1c et donc d'obtenir un motif binaire plus ou moins long, et/ou de faire varier les dimensions du codeur 1.

Par ailleurs, notamment dans une application de type système de direction, la répartition des singularités 1b1 peut être agencée pour optimiser les valeurs d'angle de rotation qui sont nécessaires dans un sens et dans l'autre pour déterminer l'angle absolu, cette rotation alternée pouvant être effectuée autour de la position « ligne droite » ou autour d'une position initiale quelconque.

En outre, notamment dans cette application spécifique où l'organe tournant est destiné à effectuer une pluralité de tours, le dispositif de détermination comprend des moyens de discrimination 9 du tour dans lequel la position angulaire absolue est déterminée, de sorte à déterminer la position angulaire absolue sur l'ensemble des tours.

Selon un autre mode de réalisation, la piste top tour 1b comprend N secteurs pourvus chacun de M/N singularités 1b1 réparties angulairement. Le dispositif peut alors comprendre des moyens de discrimination 9 du secteur dans lequel la position angulaire est déterminée. Dans un exemple de réalisation, la répartition angulaire des M/N singularités 1b1 est identique pour chaque secteur.

Ainsi, lorsque la position angulaire est déterminée par la détection d'une séquence binaire, ladite position est connue au tour ou au secteur près, et les moyens de discrimination 9 permettent de lever cette incertitude et donc de connaître la position angulaire absolue à utiliser en tant que valeur initiale.

Dans l'exemple considéré ci-dessus, la séquence binaire 10011 permet de déterminer la position « ligne droite » en tant que position absolue sur le tour où la mesure est effectuée, et les signaux issus des moyens de discrimination 9 permettent de déterminer si l'angle absolu est de -720°, -360°, 0°, 360° ou 720° (dans le cas où le volant 2 est agencé pour tourner de +/- 2 tours complets).

Les moyens de discrimination 9 peuvent comprendre des moyens électromécaniques associés à l'organe tournant, tels qu'un potentiomètre. Dans l'application système de direction, les moyens de discrimination 9 peuvent comprendre un moyen d'analyse de la vitesse différentielle des roues du véhicule. En effet, en fonction de l'angle de braquage, la vitesse différentielle des roues varie, ce qui permet de discriminer, notamment en fonction du signe et du module de ladite vitesse, le tour ou même le secteur dans lequel la position angulaire absolue est déterminée.

En variante, les moyens de discrimination 9 peuvent comprendre un accéléromètre ou un gyroscope.

En outre, la lecture d'une chaîne binaire non unique dans le motif binaire peut suffir à déterminer la position angulaire absolue à condition que la ou les autres occurrences de la chaîne dans le motif soient positionnées à des positions angulaires distantes de plus de deux fois l'incertitude angulaire du moyen de discrimination 9.

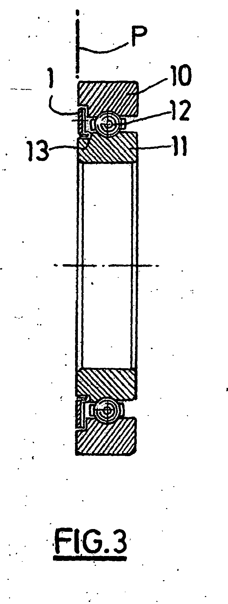

En relation avec la figure 3, on décrit un roulement comprenant une bague extérieure fixe 10 destinée à être associée à un organe fixe, une bague intérieure tournante 11 destinée à être mise en rotation par l'organe tournant et des corps roulants 12 disposés entre lesdites bagues.

Dans le mode de réalisation représenté, le codeur 1 est surmoulé sur une portée cylindrique annulaire d'une armature 13 qui est associée, par exemple par emmanchement, sur une face de la bague intérieure 11.

Le codeur 1 est associé à la bague tournante 11 de sorte que la face extérieure dudit codeur soit sensiblement contenue dans le plan P d'une face latérale de la bague fixe 10. Cette caractéristique, notamment divulguée dans le document EP-0 607 719 issu de la demanderesse, permet d'une part de protéger le codeur 1 à l'intérieur du roulement et d'autre part de pouvoir dissocier le capteur 5 du roulement en gardant la maîtrise de l'entrefer.

Dans un mode de réalisation, le volant 2 est guidé en rotation par un tel roulement de sorte à déterminer la position angulaire absolue du volant 2 par rapport au châssis, ainsi les fonctions guidage et mesure de l'angle sont réalisées par l'intermédiaire d'un même moyen mécanique.

## Revendications

1. Dispositif de détermination de la position angulaire absolue d'un organe tournant par rapport à une structure fixe, ledit dispositif comprenant :
- un codeur (1) destiné à être mis en rotation conjointement à l'organe tournant, ledit codeur comprenant une piste multipolaire principale (1a) et une piste multipolaire dite « top tour » (1 b) qui sont concentriques, ladite piste top tour comprenant M singularités (1b1) réparties angulairement ;
- un capteur fixe (5) disposé en regard et à distance d'entrefer du codeur (1), comprenant au moins trois éléments sensibles dont au moins deux sont positionnés en regard de la piste principale (1a) de sorte à délivrer deux signaux électriques S1, S2 périodiques en quadrature et au moins un est positionné en regard de la piste top tour (1 b) de sorte à délivrer un signal électrique S3, le capteur comprenant un circuit électronique apte, à partir des signaux S1, S2 et S3, à délivrer deux signaux digitaux de position A, B carrés en quadrature qui sont représentatifs de la position angulaire de l'organe tournant et un signal top tour C sous forme de M impulsions par tour du codeur (1) ;
- un dispositif de traitement (6) des signaux A, B, C qui comprend des moyens de comptage aptes à déterminer, à partir d'une position initiale, les variations de la position angulaire du codeur (1) ;
**caractérisé en ce que** les M singularités (1b1) sont réparties angulairement de sorte que le signal top tour C soit agencé pour, en combinaison avec les signaux A et B, définir des séquences binaires qui sont représentatives chacune d'une position angulaire absolue du codeur (1), le dispositif de traitement (6) comprenant des moyens de recalage de la position initiale qui, lors de la détection d'une séquence binaire, sont aptes à affecter, en tant que position initiale, la valeur de la position angulaire absolue associée à ladite séquence binaire.

2. Dispositif selon la revendication 1, **caractérisé en ce qu'**il comprend en outre des moyens de discrimination (9) du tour dans lequel la position angulaire absolue est déterminée.

3. Dispositif selon la revendication 1 ou 2, **caractérisé en ce que** la piste top tour (1b) comprend N secteurs pourvus chacun de M/N singularités (1b1) réparties angulairement.

4. Dispositif selon la revendication 3, **caractérisé en ce qu'**il comprend en outre des moyens de discrimination (9) du secteur dans lequel la position angulaire est déterminée.

5. Dispositif selon la revendication 3 ou 4, **caractérisé en ce que** la répartition angulaire des M/N singularités (1b1) est identique pour chaque secteur.

6. Dispositif selon l'une quelconque des revendications 1 à 5, **caractérisé en ce que** chaque piste multipolaire est formée d'un anneau magnétique sur lequel sont aimantés des pôles Nord et Sud équirépartis avec une largeur angulaire constante, une singularité magnétique (1b1) de la piste top tour (1b) étant formée de deux pôles adjacents dont la transition magnétique est différente des autres.

7. Roulement équipé d'un dispositif de détermination selon l'une quelconque des revendications 1 à 6, du type comprenant une bague fixe (10) destinée à être associée à un organe fixe, une bague tournante (11) destinée à être mise en rotation par l'organe tournant et des corps roulants (12) disposés entre lesdites bagues, ledit roulement étant **caractérisé en ce que** le codeur (1) est associé à la bague tournante (11).

8. Roulement selon la revendication 7, **caractérisé en ce que** le capteur (5) est associé à la bague fixe (10) du roulement.

9. Système de direction pour véhicule automobile, **caractérisé en ce qu'**il comprend un dispositif selon l'une quelconque des revendications 2 à 6, le codeur (1) étant solidaire en rotation du volant de direction (2) du véhicule et le capteur (5) étant solidaire du châssis du véhicule, de sorte à mesure la position angulaire absolue du volant (2) par rapport au châssis.

10. Système selon la revendication 9, **caractérisé en ce que** les moyens de discrimination (9) du tour ou du secteur comprennent un moyen d'analyse de la vitesse différentielle des roues du véhicule.

11. Système selon la revendication 9, **caractérisé en ce que** les moyens de discrimination (9) du tour ou du secteur comprennent un accéléromètre ou un gyroscope.

12. Système selon l'une quelconque des revendications 9 à 11, **caractérisé en ce que** le volant (2) est guidé en rotation par un roulement selon la revendication 7 ou 8.

## Claims

1. Device for determining the absolute angular position of an element rotating in relation to a fixed structure, said device comprising:
- an encoder (1) designed to be placed in rotation together with the rotating element, said encoder comprising a main multipolar track (1a) and a so-called "top turn" multipolar track (1b) which are concentric, said top turn track comprising M angularly distributed singularities (1bl);
- a fixed sensor (5) arranged opposite and at air-gap distance from the encoder (1), comprising at least three sensitive elements at least two of which are positioned opposite the main track (1a) so as to deliver two periodic electrical signals S1, S2 in quadrature, and at least one of which is positioned opposite the top turn track (1b) so as to deliver an electrical signal S3, the sensor comprising an electronic circuit capable, based on the signals S1, S2 and S3, of delivering two digital position signals A, B squared in quadrature, which are representative of the angular position of the rotating element and a top turn signal C in the form of M pulses per turn of the encoder (1);
- a device for processing (6) the signals A, B, C which comprises counting means capable of determining, from an initial position, the variations in the angular position of the encoder (1);
**characterised in that** the M singularities (1bl) are distributed angularly so that the top turn signal C is arranged, in combination with the signals A and B, to define binary sequences which each represent an absolute angular position of the encoder (1), the processing device (6) comprising means for retiming the initial position which, when they detect a binary sequence, are capable of assigning, as an initial position, the value of the absolute angular position associated with said binary sequence.

2. Device according to claim 1, **characterised in that** it also comprises means (9) for discriminating the turn in which the absolute angular position is determined.

3. Device according to claim 1 or 2, **characterised in that** the top turn track (1b) comprises N sectors each equipped with M/N angularly distributed singularities (1b1).

4. Device according to claim 3, **characterised in that** it also comprises means (9) for discriminating the sector in which the angular position is determined.

5. Device according to claim 3 or 4, **characterised in that** the angular distribution of the M/N singularities (1b1) is identical in each sector.

6. Device according to any one of the claims from 1 to 5, **characterised in that** each multipolar track is made up of a magnetic ring on which equally distributed North and South poles are magnetised with a constant angular width, a magnetic singularity (1b1) of the top turn track (1b) being formed by two adjacent poles in which the magnetic transition is different from the others.

7. Bearing equipped with a determination device according to any one of the claims from 1 to 6, of the type comprising a fixed ring (10) designed to be associated with a fixed element, a rotating ring (11) designed to be placed in rotation by the rotating element and rolling bodies (12) placed between said rings, said bearing being **characterised in that** the encoder (1) is associated with the rotating ring (11).

8. Bearing according to claim 7, **characterised in that** the sensor (5) is associated with the fixed ring (10) of the bearing.

9. Steering system for an automobile, **characterised in that** it comprises a device according to any one of the claims from 2 to 6, the encoder (1) being rotatingly solid to the steering wheel (2) of the vehicle and the sensor (5) being solidly attached to the chassis of the vehicle, so as to measure the absolute angular position of the steering wheel (2) in relation to the chassis.

10. System according to claim 9, **characterised in that** the means (9) for discriminating the turn or the sector comprise means for analysing the differential speed of the vehicle wheels.

11. System according to claim 9, **characterised in that** the means (9) for discriminating the turn or sector comprise an accelerometer or a gyroscope.

12. System according to any one of the claims from 9 to 11, **characterised in that** the steering wheel (2) is guided in rotation by a bearing according to claim 7 or 8.

## Patentansprüche

1. Vorrichtung für die Ermittlung der absoluten Winkelposition eines drehenden Organs in Bezug auf eine feste Struktur, wobei die genannte Vorrichtung umfasst :
- einen Codierer (1), der gemeinsam mit dem drehenden Organ in Drehung versetzt werden soll, wobei der genannte Codierer eine mehrpolige Hauptspur (1a) und eine mehrpolige so genannte "Top-Tour-Spur" (1b) umfasst, die konzentrisch sind, wobei die genannte Top-Tour-Spur M Singularitäten (1b1) aufweist, die winkelförmig verteilt sind;
- einen festen Sensor (5) der gegenüber und in Entfernung zum Luftspalt des Codierers (1) angeordnet ist und mindestens drei empfindliche Elemente aufweist, von denen mindestens zwei gegenüber der Hauptspur (1a) positioniert sind, um zwei periodisch phasenverschobene elektrische Signale S1, S2 abzugeben, und mindestens einer gegenüber der Top-Tour-Spur (1b) positioniert ist, um ein elektrisches Signal S3 abzugeben, wobei der Sensor eine elektronische Schaltung aufweist, die ausgehend von den Signalen S1, S2 und S3 zwei quadratisch phasenverschobene digitale Positionssignale A, B abgibt, die für die Winkelposition des drehenden Organs repräsentativ sind, und ein Top-Tour-Signal C in Form von M Impulsen pro Umdrehung des Codierers (1);
- eine Verarbeitungsvorrichtung (6) der Signale A, B, C, die Zählmittel umfasst, die ab einer Ausgangsposition die Schwankungen der Winkelposition des Codierers (1) ermitteln können;
**dadurch gekennzeichnet, dass** die M Singularitäten (1b1) winkelförmig verteilt sind, so dass das Top-Tour-Signal C vorgesehen ist, um gemeinsam mit den Signalen A und B binäre Sequenzen zu definieren, die jeweils repräsentativ sind für eine absolute Winkelposition des Codierers (1), wobei die Verarbeitungsvorrichtung (6) Rückstellmittel der Ausgangsposition umfasst, die bei der Erfassung einer binären Sequenz in der Lage sind, der genannten binären Sequenz den zugeordneten Wert der absoluten Winkelposition als Ausgangsposition zuzuteilen.

2. Vorrichtung gemäß Anspruch 1, **dadurch gekennzeichnet, dass** sie ferner Diskriminierungsmittel (9) der Umdrehung umfasst, bei der die absolute Winkelposition ermittelt wird.

3. Vorrichtung gemäß Anspruch 1 oder 2, **dadurch gekennzeichnet, dass** die Top-Tour-Spur (1b) N Sektoren umfasst, die jeweils mit M/N winkelförmig verteilten Singularitäten (1bl) versehen sind.

4. Vorrichtung gemäß Anspruch 3, **dadurch gekennzeichnet, dass** sie ferner Diskriminierungsmittel (9) des Sektors umfasst, in dem die Winkelposition ermittelt wird.

5. Vorrichtung gemäß Anspruch 3 oder 4, **dadurch gekennzeichnet, dass** die winkelförmige Verteilung der M/N Singularitäten (1b1) für jeden Sektor identisch ist.

6. Vorrichtung gemäß einem der Ansprüche 1 bis 5, **dadurch gekennzeichnet, dass** jede mehrpolige Spur aus einem Magnetring besteht, auf dem Nord- und Südpole in gleichem Abstand magnetisiert sind mit einer konstanten Winkelbreite, wobei eine magnetische Singularität (1b1) der Top-Tour-Spur (1b) aus zwei aneinander grenzenden Polen besteht, deren magnetischer Übergang sich von den anderen unterscheidet.

7. Wälzlager ausgestattet mit einer Ermittlungsvorrichtung gemäß einem der Ansprüche 1 bis 6, umfassend einen festen Ring (10), der einem festen Organ zugeordnet werden soll, einen drehbaren Ring (11), der von dem drehbaren Organ in Drehung versetzt werden soll, und zwischen den genannten Ringen angeordnete Rollkörper (12), wobei das genannte Wälzlager **dadurch gekennzeichnet ist, dass** der Codierer (1) dem drehbaren Ring (11) zugeordnet ist.

8. Wälzlager gemäß Anspruch 7, **dadurch gekennzeichnet, dass** der Sensor (5) dem festen Ring (10) des Wälzlagers zugeordnet ist.

9. Lenksystem für Kraftfahrzeug, **dadurch gekennzeichnet, dass** es eine Vorrichtung gemäß einem der Ansprüche 2 bis 6 umfasst, wobei der Codierer (1) drehfest ist mit dem Lenkrad (2) des Fahrzeugs und der Sensor (5) fest mit dem Chassis des Fahrzeugs verbunden ist, um die absolute Winkelposition des Lenkrads (2) in Bezug auf das Chassis zu messen.

10. System gemäß Anspruch 9, **dadurch gekennzeichnet, dass** die Diskriminierungsmittel (9) der Umdrehung oder des Sektors ein Analysemittel der Differentialgeschwindigkeit der Räder des Fahrzeugs umfassen.

11. System gemäß Anspruch 9, **dadurch gekennzeichnet, dass** die Diskriminierungsmittel (9) der Umdrehung oder des Sektors einen Beschleunigungsmesser oder ein Gyroskop umfassen.

12. System gemäß einem der Ansprüche 9 bis 11, **dadurch gekennzeichnet, dass** die Drehung des Lenkrads (2) anhand eines Wälzlagers gemäß Anspruch 7 oder 8 angesteuert wird.
